# EUROPEAN PATENT APPLICATION

(11) **EP 1 783 145 A1**
(43) Date of publication of application: **09.05.2007**
(21) Application number: 05755814.0
(22) Date of filing: 24.06.2005
(51) Int. Cl.: C08F 4/658, C08F 293/00

(54) **OLEFIN POLYMERIZATION CATALYST AND METHOD OF POLYMERIZATION USING THE CATALYST**

(30) Priority: 28.07.2004 JP 2004220655
(71) Applicant: Mitsui Chemicals, Inc., Tokyo 105-7117 (JP)
(72) Inventor: HIGUCHI, Masashi c/o Mitsui Chemicals, Inc., Takaishi-shi, Osaka 592-8501 (JP); MATSUMURA, Shuji c/o Mitsui Chemicals, Inc., Takaishi-shi, Osaka 592-8501 (JP); SASAKI, Yoshio c/o Mitsui Chemicals, Inc., Takaishi-shi, Osaka 592-8501 (JP); MORITA, Kiyomi c/o Mitsui Chemicals, Inc., Takaishi-shi, Osaka 592-8501 (JP); HASHIZUME, Satoshi c/o Mitsui Chemicals, Inc., Takaishi-shi, Osaka 592-8501 (JP)
(74) Representative: HOFFMANN EITLE
(86) International application number: PCT/JP2005/012153
(87) International publication number: WO 2006/011334

(57) **Abstract**

Disclosed is a catalyst for olefin polymerization, comprising: Component [A]: a prepolymer obtained by olefin prepolymerization on solid titanium catalyst component having an average particle size of 25 to 70 µm produced by contacting of a solid component (i) having an average particle size of 26 to 75 µm, containing magnesium, titanium, halogen, and an electron donor (c₃), and being free from detachment of titanium by washing with hexane at 25°C, a polar compound (ii) having a dipole moment of 0.50 to 4.00 Debye, and at least one compound (iii) selected from liquid titanium (d) and an electron donor (e), in which the content of titanium in the solid component (i) is reduced by ≥25% by weight, and the weight ratio of the sum of the electron donor (c₃) and the electron donor (e) to titanium [electron donor (c₃+e)/titanium atoms] is ≥7;
Component [B]: an organometallic compound; and
Component [C]: an organosilicon compound represented by the following formula (I):

Si(OR¹)₃(NR²R³) (I)

(wherein R¹ is a hydrocarbon group having 1 to 8 carbon atoms, R² is a hydrocarbon group having 1 to 12 carbon atoms or hydrogen atom, R³ is a hydrocarbon group having 1 to 12 carbon atoms).

According to the catalyst, an olefin polymer having high stereoregularity and low molecular weight (high fluidity) can be efficiently provided.

## Description

### TECHNICAL FIELD

The present invention relates to a catalyst for olefin polymerization, to method for polymerizing an olefin using the catalyst for olefin polymerization, and to an olefinic polymer obtained by the polymerization method.

### BACKGROUND ART

Catalysts comprising a titanium catalyst component and an organoaluminum compound have been commonly known hitherto as those for producing polyolefins. In particular, catalysts using a carrier-supported solid titanium catalyst component as the titanium catalyst component are known to exhibit a high polymerization activity. Above all, the catalysts using a titanium catalyst component supported on magnesium chloride as the solid titanium catalyst component are known to exhibit a high polymerization activity, and to produce polyolefins having high stereoregularity when olefins such as propylene and butene are polymerized. Further, as a catalyst for producing a polyolefin having higher stereoregularity, there has been proposed, for example, a catalyst comprising a magnesium chloride-supported solid titanium catalyst component, an organoaluminum compound, and an electron donating compound (electron donor) as a third component.

JP-A No. 9-40714 discloses an alkoxysilane compound having an aliphatic amino substituent as a third component of a polymerization catalyst component. However, specifically exemplified compounds therein are only dimethoxysilanes, which do not have satisfactory performances in view of the polymerization activity and stereoregularity. JP-A No. 8-143620 discloses a method for polymerizing an α-olefin using a dialkoxysilane having two aliphatic amino substituents, but this method also does not have satisfactory performances in view of hydrogen-response and stereoregularity. In addition, JP-A Nos. 8-143621 and 11-147923 disclose methods for polymerizing an α-olefin using an organosilicon compound having a cyclic amino group, but these methods is also does not have satisfactory performances in view of hydrogen-response upon polymerization.

JP-A Nos. 2000-336113 and 2004-107362 propose catalysts for an olefin polymer which comprise a prepolymerized catalyst containing an electron donor having at least two ether bonds, an organometallic compound, and an organosilicon compound having a polycyclic amino group as catalysts for an olefin polymer for promoting high stereoregularity and good hydrogen-response. However, the catalysts for an olefin polymer as disclosed above are still insufficient in improvement on stereoregularity and hydrogen-response. If the polymerization catalysts are insufficient in hydrogen-response, in the case of preparing an olefin polymer having high stereoregularity and low molecular weight (high fluidity) with liquefied monomers (so-called, bulk polymerization), use of an excessive amount of hydrogen molecules as a chain transfer agent in a polymerization reactor have caused problems in the polymerization reactor having a limit in the internal pressure. If the polymerization temperature is lowered so as to decrease the pressure, the production rate is inevitably delayed, thereby generating a problem of giving adverse effect on the productivity.

### DISCLOSURE OF THE INVENTION

It is an object of the present invention to provide a catalyst for olefin polymerization, for preparing an olefinic polymer with high stereoregularity and high fluidity, at a low cost, with a high activity, and without use of a chain transfer agent such as hydrogen molecules in a large amount, which comprises a titanium-based solid component, an organometallic compound, and an organosilicon compound; and a method for polymerizing an olefin using the catalyst.

The catalyst for olefin polymerization of the present invention is characterized in that it comprises the following components [A], [B] and [C].
Component [A]: a prepolymer obtained by olefin prepolymerization on solid titanium catalyst component [A'] having an average particle size of 25 to 70 µm prepared by contacting of a solid component (i) having an average particle size of 26 to 75 µm, containing magnesium, titanium, halogen, and an electron donor (c₃), and being free from detachment of titanium by washing with hexane at 25°C, a polar compound (ii) having a dipole moment of 0.50 to 4.00 Debye, and at least one compound (iii) selected from liquid titanium (d) and an electron donor (e), in which the content of titanium in the solid component (i) is reduced by ≥25% by weight, and the weight ratio of the sum of the electron donor (c₃) and the electron donor (e) to titanium [electron donor (c₃+e)/titanium atoms] is ≥7;
Component [B]: an organometallic compound; and
Component [C]: an organosilicon compound represented by the following formula (I):

   Si(OR¹)₃(NR²R³) (I)

   (wherein R¹ is a hydrocarbon group having 1 to 8 carbon atoms, R² is a hydrocarbon group having 1 to 12 carbon atoms or hydrogen atom, R³ is a hydrocarbon group having 1 to 12 carbon atoms).

Further, in a preferable embodiment of the catalyst for olefin polymerization of the present invention, the component [A] is a prepolymer obtained by prepolymerization in the presence of an organosilicon compound (D) represented by the following formula (II):

Si(OR⁴)₄₋ₙR⁵ₙ (II)

(wherein n is 1, 2 or 3, R⁴ is a hydrocarbon group having 1 to 8 carbon atoms, and R⁵ is a hydrocarbon group having 1 to 40 carbon atoms).

The catalyst for olefin polymerization of the present invention is characterized in that upon carrying out bulk polymerization of propylene in the presence of hydrogen under the conditions of a temperature of 70°C and a pressure 3.8 MPa/G for 1 hour, the melt flow rate MFR (230°C, under a load of 2.16 kg) of the propylene polymer is 300 g/10 min or more; the mmmm fraction of the methyl group arrangement (dd or 11 referred to as m) of five continuous propylene monomer units, as measured by ¹³C-NMR, is 97.3% or more, and the catalyst activity is 30000 g-PP/g-cat hr or more.

The present invention relates to a method for producing an olefinic polymer, comprising polymerizing or copolymerizing an olefin in the presence of the catalyst for olefin polymerization.

The method for producing an olefinic polymer of the present invention is characterized in that in the case of sequentially carrying out a step of homopolymerizing propylene, and a step of copolymerizing propylene, and at least one olefin selected from ethylene and an α-olefin having 4 or more carbon atoms, it sufficiently takes advantage of the characteristics of the catalyst for olefin polymerization of the present invention. Usually, a block polypropylene obtained by this multi-stage polymerization simultaneously satisfies the following requirements [a'] to [c'], thus being preferably used in a lot of industrial applications:
[a'] an amount of the normal decane-soluble fraction at room temperature is 5.0% by weight or more;
[b'] an intrinsic viscosity of the normal decane-soluble fraction at room temperature is 2.0 dl/g or more; and
[c'] a homopolymer of propylene after completion of the step of homopolymerizing propylene, has an amount of the normal decane-soluble fraction at room temperature of 1.0% by weight or less, an mmmm fraction of 97.5% or more, and an MFR (230°C, under a load of 2.16 kg) of 150 g/10 min or more.

Among the block polypropylenes simultaneously satisfying the aforementioned requirements [a'] to [c'], a block polypropylene simultaneously satisfying the requirements [a] to [c] is a novel block polypropylene which can be produced using the catalyst for olefin polymerization of the present invention for the first time, while greatly contributing to the industry:
[a] an amount of the normal decane-soluble fraction at room temperature is 5.0 to 35% by weight;
[b] an intrinsic viscosity of the normal decane-soluble fraction at room temperature is 2.0 to 10 dl/g; and
[c] a homopolymer of propylene after completion of the step of homopolymerizing propylene, has an amount of the normal decane-soluble fraction at room temperature of 1.0% by weight or less, an mmmm fraction of 97.5% or more, and an MFR (230°C, under a load of 2.16 kg) of 200 g/10 min or more.

Hereinafter, normal decane and polypropylene may be simply referred to as n-decane and PP, respectively.

### BEST MODE FOR CARRYING OUT THE INVENTION

Hereinbelow, a catalyst for olefin polymerization, a method for polymerizing an olefin using the catalyst, and an olefinic polymer obtained by using the polymerization method, in particular, a block polypropylene satisfying specific properties will be described with reference to best modes for carrying out the invention.

### Catalyst for olefin polymerization

The catalyst for olefin polymerization of the present invention is characterized in that it comprises the following components [A], [B] and [C].
Component [A]: a prepolymer obtained by olefin prepolymerization on solid titanium catalyst component [A'] having an average particle size of 25 to 70 µm produced by contacting of a solid component (i) having an average particle size of 26 to 75 µm, containing magnesium, titanium, halogen, and an electron donor (c₃), and being free from detachment of titanium by washing with hexane at 25°C, a polar compound (ii) having a dipole moment of 0.50 to 4.00 Debye, and at least one compound (iii) selected from liquid titanium (d) and an electron donor (e), in which the content of titanium in the solid component (i) is reduced by ≥25% by weight, and the weight ratio of the sum of the electron donor (c₃) and the electron donor (e) to titanium [electron donor (c₃+e)/titanium atoms] is ≥7;
Component [B]: an organometallic compound,
Component [C]: an organosilicon compound represented by the following formula (I):

   Si(OR¹)₃(NR²R³) (I)

   (wherein R¹ is a hydrocarbon group having 1 to 8 carbon atoms, R² is a hydrocarbon group having 1 to 12 carbon atoms or hydrogen atom, R³ is a hydrocarbon group having 1 to 12 carbon atoms).

The catalyst for olefin polymerization of the present invention may further contain any component other than the components [A], [B] and [C] as long as it has standard catalyst performances under specific polymerization conditions, that is, within the range satisfying the characteristics that upon carrying out bulk polymerization of propylene in the presence of hydrogen under the conditions of a temperature of 69 to 71°C and a pressure 3.8 MPa/G for 1 hour, the melt flow rate MFR (230°C, under a load of 2.16 kg) of the propylene polymer is 300 g/10 min or more; the mmmm fraction of the methyl group arrangement (dd or 11 referred to as m) of five continuous propylene monomer units, as measured by ¹³C-NMR, is 97.3% or more, and the catalyst activity is 30000 g-PP/g-cat hr or more. Usually, by using only the components [A], [B] and [C], the performances as the polymerization catalyst of the present invention can be sufficiently exhibited. Hereinbelow, the component [A], the component [B], and the component [C] will be sequentially described.

### Component [A]

The component [A] is a prepolymer obtained by olefin prepolymerization on solid titanium catalyst component [A'] having an average particle size of 25 to 70 µm prepared by contacting of a solid component (i), having an average particle size of 26 to 75 µm, containing magnesium, titanium, halogen, and an electron donor (c₃), and being free from detachment of titanium by washing with hexane at 25°C, a polar compound (ii) having a dipole moment of 0.50 to 4.00 Debye, and at least one compound (iii) selected from liquid titanium (d) and an electron donor (e), in which the content of titanium in the solid component (i) is reduced by ≥25% by weight, and the weight ratio of the sum of the electron donor (c₃) and the electron donor (e) to titanium [electron donor (c₃+e)/titanium atoms] is ≥7 (hereinafter, the "prepolymer" may be referred to as a "prepolymerized catalyst").

As described above, the component [A] is characterized in that it is obtained by prepolymerization of the component [A'] with an olefin. Hereinbelow, a method for preparing the component [A'], and the characteristic properties of the component [A'] will be described, and then the component [A] obtained by prepolymerization of the component [A'] will be described.

The solid component (i) as a raw material for preparing the component [A'] can be prepared by contacting of a magnesium compound (c₁), a titanium compound (c₂) and an electron donor (c₃).

### (1) Magnesium compound (c₁)

Examples of the magnesium compound (c₁) used in the preparation of the solid component (i) include a magnesium compound having reduction ability, and a magnesium compound having no reduction ability. In the present invention, for the preparation of the solid component (i), the magnesium compound is preferably used in the solid state. This magnesium compound in the solid state may be one in which the magnesium compound itself is in the solid state, or an adduct with an electron donor (f).

As the magnesium compound, magnesium chloride, ethoxymagnesium chloride, butoxymagnesium, and the like, or compounds as described in JP-A No. 2004-002742 can be used. Further, as the electron donor (f), a compound having an ability of solubilizing the magnesium compound is used, or alcohol, aldehyde, amine, carboxylic acid, and a mixture thereof as described in JP-A No. 2004-002742 can be used. Among the electron donors, alcohols are preferable, and ethanol, propanol, and butanol are particularly preferable. The amounts of the magnesium compound (c₁) and the electron donor (c-i) to be used vary depending on the kinds, the conditions for mutually contacting, or the like, but usually the magnesium compound (c₁) is used in an amount of 0.1 to 20 mol/liter, and preferably 0.5 to 5 mol/liter, based on the electron donor (c-i).

### (2) Titanium compound (c₂)

As the titanium compound (c₂), the compound which is in the liquid state at room temperature is preferably used. The same compound to the liquid titanium compound (d) to be described later may be used, or other compounds may be used. But, the same compound to the liquid titanium compound (d) is usually used (hereinafter, "the titanium compound which is in the liquid state at room temperature" may be simply referred to as a "liquid titanium"). Among the liquid titanium, particularly a tetra-valent titanium compound is preferably used. Examples of the tetra-valent titanium compound include the compound represented by the following formula:

Ti(OR)_{g}X_{4-g}

(wherein R is a hydrocarbon group having 1 to 15 carbon atoms, X is a halogen atom, and 0 ≤ g ≤ 4).

Among these, titanium tetrahalide is preferable, and titanium tetrachloride is particularly preferable. These titanium compounds may be used in combination of two or more kinds thereof. The titanium compound may be used as diluted with hydrocarbon, halogenated hydrocarbon or aromatic hydrocarbon.

### (3) Electron donor (c₃)

Examples of the electron donor (c₃) used in the preparation of the solid component (i) include alcohols, phenols, ketones, aldehydes, carboxylic acids, organic acid halides, organic or inorganic acid esters, ethers, acid amides, acid anhydrides, ammonia, amines, nitriles, isocyanate, nitrogen-containing cyclic compounds, and oxygen-containing cyclic compounds.

More specifically, there may be exemplified by alcohols having 1 to 18 carbon atoms such as methanol, ethanol, propanol, butanol, pentanol, hexanol, 2-ethylhexanol, octanol, dodecanol, octadecylalcohol, oleylalcohol, benzylalcohol, phenylethylalcohol, cumylalcohol, isopropylalcohol, and isopropylbenzylalcohol; halogen-containing alcohols having 1 to 18 carbon atoms such as trichloromethanol, trichloroethanol, and trichlorohexanol; phenols having 6 to 20 carbon atoms, which may have a lower alkyl group, such as phenol, cresol, xylenol, ethylphenol, propylphenol, nonylphenol, cumylphenol, and naphthol; ketones having 3 to 15 carbon atoms, such as acetone, methylethylketone, methylisobutylketone, acetophenone, benzophenone, and benzoquinone; aldehydes having 2 to 15 carbon atoms, such as acetaldehyde, propionaldehyde, octylaldehyde, benzaldehyde, tolualdehyde, and naphthoaldehyde; organic acid esters having 2 to 30 carbon atoms, such as methyl formate, methyl acetate, ethyl acetate, vinyl acetate, propyl acetate, octyl acetate, cyclohexyl acetate, ethyl propionate, methyl butyrate, ethyl valerate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluenate, ethyl toluenate, amyl toluenate, ethyl ethoxybenzoate, methyl anisate, ethyl anisate, ethyl ethoxybenzoate, γ-butyrolactone, δ-valerolactone, coumarine, phthalide, dimethyl carbonate, and ethyl carbonate; acid halides having 2 to 15 carbon atoms, such as acetylchloride, benzoylchloride, toluenic acid chloride, and anisic acid chloride; ethers having 2 to 20 carbon atoms, such as methyl ether, ethyl ether, isopropyl ether, butyl ether, amyl ether, anisole and diphenyl ether; acid amides, such as N,N-dimethylacetamide, N,N-diethylbenzamide and N,N-dimethyltoluamide; amines, such as methylamine, ethylamine, dimethylamine, diethylamine, trimethylamine, triethylamine, tributylamine, tribenzylamine, tetramethylenediamine and hexamethylenediamine; nitriles, such as acetonitrile, benzonitrile and tolunitrile; acid anhydrides, such as acetic anhydride, phthalic anhydride and benzoic anhydride; pyrroles, such as pyrrole, methylpyrrole and dimethylpyrrole; pyrrolines; pyrrolidines; indoles; pyridines, such as pyridine, methylpyridine, ethylpyridine, propylpyridine, dimethylpyridine, ethylmethylpyridine, trimethylpyridine, phenylpyridine, benzylpyridine and pyridine chloride; nitrogen-containing cyclic compounds, such as piperidines, quinolines and isoquinolines; and oxygen-containing cyclic compounds, such as tetrahydrofuran, 1,4-cineol, 1,8-cineol, pinolfuran, methylfuran, dimethylfuran, diphenylfuran, benzofuran, coumaran, phthalan, tetrahydropyran, pyran and dihydropyran.

If the alcohols having 1 to 18 carbon atoms is used as the electron donor (c₃), there may be preferably exemplified by monoethers of polyhydric alcohols such as 1-methoxyethanol, 2-methoxyethanol, 4-methoxybutanol, and 2-butoxyethanol.

If the organic acid esters having 2 to 30 carbon atoms is used as the electron donor (c₃), there may be preferably exemplified by the polyhydric carboxylic acid esters represented by the following formulae. 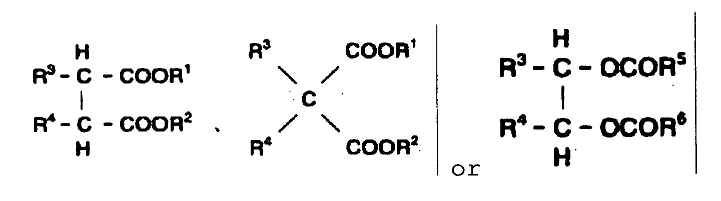 wherein R¹ is a substituted or unsubstituted hydrocarbon group; R², R⁵ and R⁶ are each hydrogen atom, or a substituted or unsubstituted hydrocarbon group; and R³ and R⁴ are each hydrogen atom, or a substituted or unsubstituted hydrocarbon group, and preferably at least either of them is a substituted or unsubstituted hydrocarbon group. R³ and R⁴ may be bonded to each other to form a cyclic structure. The hydrocarbon groups, R¹ to R⁶, generally have 1 to 15 carbon atoms, and if they are substituted, the substituent contains a heteroatom such as N, O, and S, and for example, a group such as C-O-C, COOR, COOH, OH, SO₃H, -C-N-C-, and NH₂.

Further, in the present invention, a compound having at least two ether bonds with a plurality of atoms being therebetween (hereinafter, also referred to as "polyether") can be used as the electron donor (c₃). Examples of the polyether include compounds in which the atoms between the ether bonds are at least two kind of atoms selected from carbon, silicon, oxygen, nitrogen, phosphorous, boron, sulfur, and a mixture thereof. Preferable are the compounds in which the atoms between the ether bonds are bonded with a relatively bulky substituent, and the atoms between the at least two ether bonds contain a plurality of carbon atoms. For example, polyethers represented by the following formula are preferable. 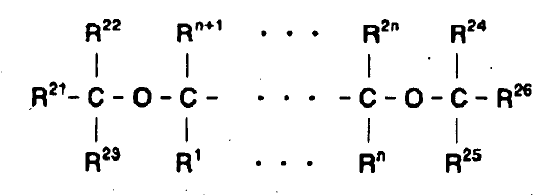 (wherein n is an integer satisfying the condition of 2 ≤ n ≤ 10; R¹ to R²⁶ are each a substituent having at least one kind of elements selected from carbon, hydrogen, oxygen, halogen, nitrogen, sulfur, phosphorous, boron and silicon; any of R¹ to R²⁶, and preferably R¹ to R²ⁿ may be bonded to each other to form a ring other than a benzene ring, and the main chain may contain atoms other than carbon).

Among the polyethers, preferably used are 1,3-diethers, and particularly preferably used are 2,2-diisobutyl-1,3-dimethoxypropane, 2-isopropyl-2-isobutyl-1,3-dimethoxypropane, 2-isopropyl-2-isopentyl-1,3-dimethoxypropane, 2,2-dicyclohexyl-1,3-dimethoxypropane, 2,2-bis(cyclohexylmethyl)-1,3-dimethoxypropane, 2-cyclohexyl-2-isopropyl-1,3-dimethoxypropane, 2-isopropyl-2-s-butyl-1,3-dimethoxypropane, 2,2-diphenyl-1,3-dimethoxypropane and 2-cyclopentyl-2-isopropyl-1,3-dimethoxypropane.

Further, the organosilicon compound to be described later having at least one alkoxy group, water, anionic, cationic or nonionic surface active surfactants, and the like are employable as the electron donor (c₃).

In the present invention, as the electron donors (c₃), preferably used are carboxylic acid esters, more preferably used are polycarboxylic acid esters, and polyhydroxy compound esters, and particularly preferably used are phthalic acid esters. In addition, ethers of the aliphatic polyhydroxy compounds and acid anhydrides can be used as a preferable electron donor (c₃).

The electron donor (c₃) can be used in combination of two or more kinds thereof.

### (4) Preparation of the solid component (i)

In the present invention, the magnesium compound (c₁) in the solid state, the titanium compound (c₂) in the liquid state, and the electron donor (c₃) can be contacted to prepare a solid component (i). The order of contacting each of the components (c₁), (c₂) and (c₃) is not particularly limited, but usually a method in which the component (c₁) and the component (c₂) are firstly contacted, and the component (c₃) is then contacted therewith is preferably employed. Further, when the components are in contact, the titanium compound (c₂) in the liquid state may be once used to produce a solid matter (S₁), or thus obtained solid matter (S₁) may be further contacted with the titanium compound (c₂) in the liquid state to produce a solid matter (S₂).

Further, when the components (c₁) to (c₃) are contacted to produce a solid matter, the magnesium compound (c₁) in the solid state is preferably dispersed in a hydrocarbon solvent and then used.

As the solid component (i) to be contacted with the polar compound (ii) having a dipole moment of 0.50 to 4.00 Debye, and at least one compound (iii) selected from liquid titanium (d) and an electron donor (e), each of which will be described later, the solid component (i) as obtained in the above-described method may be used as it is, or the solid component obtained by further washing the solid matter (S₁) or (S₂) with a hydrocarbon solvent at 0 to 150°C may be used. Usually, the solid component obtained by further carrying out washing treatment with a hydrocarbon solvent is preferably used (hereinafter, the solid component obtained by further carrying out washing treatment with a hydrocarbon solvent is also referred to as a solid component (i)). The solid component (i) has an average particle size of usually 26 to 75 µm, preferably 28 to 70 µm, and more preferably 32 to 60 µm.

The components are contacted at a temperature of usually -70°C to +200°C, preferably-50°C to +150°C, and more preferably -30°C to +130°C. The amount of each of the component [c₁], [c₂] and [c₃] to be used in the preparation of solid component (i) varies depending on the preparation method, but the electron donor (c₃) can be used in an amount of 0.01 to 10 mol, and preferably 0.1 to 5 mol, and the titanium compound (c₂) can be used in an amount of 0.01 to 1000 mol, and preferably 0.1 to 200 mol, based on 1 mol of the magnesium compound (c₁).

Further, in this method, when the magnesium compound (c₁') in the solid state prepared from the magnesium compound (c₁) and the electron donor (c-i) is contacted with the titanium compound (c₂) in the liquid state, and then with the electron donor (c₃), at least one compound selected from polycarboxylic acid esters and ethers of the polyhydroxy compounds are preferably used as the electron donor (c₃).

Further, examples of the hydrocarbon solvent used for washing the solid component (i) include aliphatic hydrocarbon solvents, such as hexane, heptane, octane, nonane, decane and cetane; non-halogenated aromatic hydrocarbon solvents, such as toluene, xylene and benzene; and halogen-containing aromatic hydrocarbon solvents to be described later. Among these, preferably used are aliphatic hydrocarbon solvents and non-halogenated aromatic hydrocarbon solvents.

For washing the solid matter (S₁) or (S₂), the hydrocarbon solvent is used in an amount of usually 10 to 500 ml, and preferably 20 to 100 ml, based on 1 g of the solid matter. Thus obtained solid component (i) contains magnesium, titanium, halogen and electron donor (c₃). The solid component (i) preferably has a ratio of the electron donor (c₃)/titanium atoms (the weight ratio) of 6 or less.

The solid component (i) is free from detachment of titanium by washing with hexane at room temperature.

### (5) Contact of the solid component (i), the polar compound (ii), and at least one selected from the liquid titanium (d) and the electron donor (e).

In the present invention, the solid component (i), the polar compound (ii) having a dipole moment of 0.50 to 4.00 Debye, and at least one compound (iii) selected from liquid titanium (d) and an electron donor (e) are contacted to prepared a solid titanium catalyst component [A']. Upon contact, either the liquid titanium (d) or the electron donor (e) can be used, but combined use of the liquid titanium (d) and the electron donor (e) increased the effect of exhibiting the characteristics of the catalyst for olefin polymerization of the present invention.

Examples of the polar compound (ii) having a dipole moment of 0.50 to 4.00 Debye (hereinafter, simply referred to as "polar compound") include halogen-containing aromatic hydrocarbons, specifically such as, chlorobenzene, o-dichlorobenzene, m-dichlorobenzene, trichlorobenzene, α,α,α-trichlorotoluene, o-chlorotoluene, 2,4-dichlorotoluene, benzyl chloride, and 2-chlorobenzyl chloride; halogen-containing aliphatic hydrocarbons, such as 1,2-dichloroethane, 1,1,2,2-tetrachloroethane, 1-chloropropane, 2-chloropropane, 1,2-dichloropropane, 1-chlorobutane, 2-chlorobutane, 1-chloro-2-methylpropane, 2-chloro-2-methylpropane, and 1-chloropentane; and halogen-containing silane compounds, such as diphenyldichlorosilane, and methyltrichlorosilane. Among these, preferable are halogen-containing aromatic hydrocarbons.

Examples of the liquid titanium (d) to be contacted with the solid component (i) include those as described before for the titanium compound (c₂). Among these, preferable is tetrahalidetitanium, and particularly preferable is titanium tetrachloride.

Examples of the electron donor (e) to be contacted with the solid component (i) include those as described before for the electron donor (c₃). Among these, those as described before for the electron donor (c₃) used in the preparation of the solid component (i) to be contacted are efficiently used.

The solid component (i), the polar compound (ii), and at least one compound (iii) selected from the liquid titanium (d) and the electron donor (e) are contacted at a temperature of usually 110 to 160°C, and preferably 115°C to 150°C, for 1 minute to 10 hours, and preferably 10 minutes to 5 hours.

For the contact, the polar compound (ii) is used in an amount of usually 1 to 10,000 ml, preferably 5 to 5,000 ml, and more preferably 10 to 1,000 ml, based on 1 g of the solid component (i). The liquid titanium (d) is used in an amount in the range of usually 0.1 to 50 ml, preferably 0.2 to 20 ml, and particularly preferably 0.3 to 10 ml, based on 100 ml of the polar compound (ii).

The electron donor (e) is used in an amount of usually 0.01 to 10 ml, preferably 0.02 to 5 ml, and particularly preferably 0.03 to 3 ml, based on 100 ml of the polar compound (ii).

The order of contacting the solid component (i), the polar compound (ii), and at least one compound (iii) selected from the liquid titanium (d) and the electron donor (e) is not particularly limited, but usually a method in which the polar compound (ii), the liquid titanium (d) and the electron donor (e) are firstly contacted, and the solid component (i) is then contacted therewith is preferably employed. A method in which the contacted product is conducted several times with the polar compound (ii), the liquid titanium (d) and the electron donor (e) is also preferably employed.

The solid component (i), the polar compound (ii), and at least one compound (iii) selected from the liquid titanium (d) and the electron donor (e) are preferably contacted under stirring under the inert gas atmosphere. For example, it is preferable that in a sufficiently nitrogen gas-flushed glass flask equipped with a stirrer, a slurry comprising the solid component (i), the polar compound (ii), and at least one compound (iii) selected from the liquid titanium (d) and electron donor (e) is stirred at the above-described temperature with the stirrer at a rotation speed of 100 to 1000 rpm, and preferably 200 to 800rpm for the above-described time, so as to contact the solid component (i), the polar compound (ii), and at least one compound (iii) selected from the liquid titanium (d) and the electron donor (e).

After contacting, by means of a separation method such as filtration, a solid fraction, that is, a solid titanium catalyst component [A'] can be isolated. In order to separate and removal of the polar compound (ii) from the solid fraction, usually the solid fraction is sufficiently washed with a hydrocarbon solvent such as hexane.

By such the contacting, the solid titanium catalyst component [A'] having the decreased content of titanium, as compared with the solid component (i) is obtained. Specifically, the catalyst component [A'] is obtained, having the decreased content of titanium which is at least 25% by weight, and preferably 30 to 95% by weight, and more preferably 40 to 90% by weight less than that of the solid component (i) . Further, the solid titanium catalyst component [A'] according to the present invention is characterized in that it comprises magnesium, titanium, halogen, and an electron donor, and satisfies the following requirements [k1] to [k5].
[k1] The content of titanium is 2.5% by weight or less, preferably 2.2 to 0.1% by weight, more preferably 2.0 to 0.2% by weight, particularly preferably 1.8 to 0.3% by weight, and most preferably 1.5 to 0.4% by weight.
[k2] The total content of the electron donor (c₃) and the electron donor (e) is 8 to 30% by weight.
[k3] The ratio of the electron donor (c₃+e) /titanium atoms (the weight ratio) is 7 or more, preferably 7.5 to 35, more preferably 8 to 30, and particularly preferably 8.5 to 25.
[k4] It is substantially free from detachment of titanium by washing with hexane at room temperature. Here, the term "washing with hexane" means washing with hexane in an amount usually 10 to 500 ml, and preferably 20 to 100 ml, of based on 1 g of the component [A'] for 5 minutes. The term "room temperature" refers to a temperature of 15 to 25°C. Further, "being substantially free from detachment of titanium" means that the titanium concentration in the hexane washing solution is 0. 1 g/liter or less.
[k5] The average particle size is 25 to 70 µm, preferably 28 to 65 µm, more preferably 30 to 60 µm, and particularly preferably 32 to 55 µm.

Here, the concentrations by weight of magnesium, halogen, titanium, and the electron donor each mean % by weight based on the unit weight of the component [A']. The concentrations of magnesium, halogen and titanium are values as measured by Inductively Coupled Plasma-Atomic Emission Spectrophotometer (ICP method), and the concentration of the electron donor is a value as quantified by gas chromatography. Further, the average particle size of the solid titanium catalyst component [A'] is a value as measured by centrifugal precipitation method using a decalin solvent.

### (6) Prepolymerization

The component [A'] is then converted to a component [A], that is, a prepolymer, by prepolymerization of olefins. As the prepolymerization according to the present invention, a solvent polymerization method using an inert medium, a bulk polymerization method using the olefins (monomers) as a liquid solvent, a vapor phase polymerization method for polymerizing the monomers in the vapor state, or a combination thereof can be used. The prepolymer [A] is formed by prepolymerization of olefins in the presence of the catalyst component [A'], the organometallic compound, and if necessary, the electron donor. If the main polymerization at the next stage is comprised of a plurality of polymerization steps (polymerization stages) having different olefins (monomer) species, an electron donor is often used in combination upon prepolymerization, in order to facilitate the control of MFR and the stereoregularity of the olefinic polymer, and the olefin polymerization activity. If the electron donor is used, the electron donor is used in an amount of 0.001 to 20 fold-mol, preferably 0.01 to 10 fold-mol, and more preferably 0.05 to 1 fold-mol, based on the solid titanium catalyst component [A'] in terms of 1 mol of the titanium atoms.

The prepolymer may be separated and then supplied to the next stage, that is, a main polymerization step; or otherwise, the prepolymer may be further subj ect to plural prepolymerization steps and then supplied to the main polymerization step, or subject to main polymerization without separation of the prepolymer.

Examples of the olefins used for the prepolymerization include α-olefins of 2 or more carbon atoms, such as ethylene, propylene, 1-butene, 1-pentene, 1-hexene, 3-methyl-1-butene, 3-methyl-1-pentene, 3-ethyl-1-pentene, 4-methyl-1-pentene, 4,4-dimethyl-1-pentene, 4-methyl-1-hexene, 4,4-dimethyl-4-hexene, 4-ethyl-1-hexene, 3-ethyl-1-hexene, 1-octene, 1-decene, 1-dodecene, 1-tetradecene, 1-hexadecene, 1-octadecene and 1-eicosene. Further, the later-described vinyl compounds and polyene compounds are also employable for the prepolymerization. These compounds may be used in combination of two or more kinds thereof.

The prepolymerization time is usually 0.1 to 10 hours, and preferably a times enough to keep the prepolymerization until 0.1 to 100 g of the prepolymer is produced, per 1 g of the solid catalyst component [A']. If the amount of the prepolymer to be produced is 0.1 g or less, per 1 g of the solid catalyst component, the polymerization activity is not sufficient upon main polymerization, and there are a lot of the catalyst residues. Further, the α-olefin polymer does not have sufficient stereoregularity. If the amount of the prepolymer to be produced is more than 100 g, the polymerization activity and the crystallinity of the olefinic polymer tend to be lowered. The prepolymerization temperature is 0 to 100°C, and preferably 10 to 90°C. If prepolymerization is carried out at a high temperature exceeding 50°C, it is preferable that the concentration of ethylene or α-olefin concentration is lowered, or the polymerization time is shortened. As the polymerization time is longer, it gets harder to control the process so as to obtain 0.1 to 100 g of a prepolymer, per 1 g of the solid catalyst component, and the polymerization activity or the crystallinity of the obtained olefinic polymer may be lowered upon main polymerization.

As the organometallic compound used in the prepolymerization, the later-described organometallic compounds [B] can be used without limitation. Among the organometallic compounds [B], the organoaluminum compound [B₁] represented by the formula (IV) is preferably used. Upon prepolymerization, the organoaluminum compound component [B₁] is used so that a molar ratio of the aluminum atoms in the organoaluminum compound component [B₁] to the titanium atoms in the solid catalyst component [A'] (Al/Ti molar ratio) is usually 0.5 to 1000, and preferably 1 to 400.

As the electron donor used in prepolymerization, known organosilicon compounds can be used without limitation, but among them, preferable is the organosilicon compound [D] represented by the following formula (II):

Si(OR⁴)₄₋ₙR⁵ₙ (II)

(wherein n is 1, 2 or 3, R⁴ is a hydrocarbon group having 1 to 8 carbon atoms, and R⁵ is a hydrocarbon group having 1 to 40 carbon atoms). Specific examples of the organosilicon compound [D] represented by the formula (II) include the following compound: trimethylmethoxysilane, trimethylethoxysilane, dimethyldimethoxysilane, dimethyldiethoxysilane, diisopropyldimethoxysilane, t-butylmethyldimethoxysilane, t-butylmethyldiethoxysilane, t-amylmethyldiethoxysilane, diphenyldimethoxysilane, phenylmethyldimethoxysilane, diphenyldiethoxysilane, bis-o-tollyldimethoxysilane, bis-m-tollyldimethoxysilane, bis-p-tollyldimethoxysilane, bis-p-tollyldiethoxysilane, bisethylphenyldimethoxysilane, ethyltrimethoxysilane, ethyltriethoxysilane, vinyltrimethoxysilane, methyltrimethoxysilane, n-propyltriethoxysilane, decyltrimethoxysilane, decyltriethoxysilane, phenyltrimethoxysilane, y-chloropropyltrimethoxysilane, methyltriethoxysilane, ethyltriethoxysilane, vinyltriethoxysilane, n-butyltriethoxysilane, phenyltriethoxysilane, γ-aminopropyltriethoxysilane, chlorotriethoxysilane, ethyltriisopropoxysilane, vinyltributoxysilane, trimethylphenoxysilane, methyltriallyloxysilane, vinyltris(β-methoxyethoxysilane), vinyltriacetoxysilane, and dimethyltetraethoxydisiloxane. Also employable are ethyl silicate, butyl silicate, or the like.

As the organosilicon compound [D] represented by the formula (II), which is optionally used upon prepolymerization according to the present invention, particularly preferable is an organosilicon compound [D-i] represented by the following formula (II'):

R⁶ₙSi(OR⁷)₄₋ₙ (II')

(wherein n is 1, 2 or 3; when n is 1, R⁶ is a secondary or tertiary hydrocarbon group having 1 to 20 carbon atoms; when n is 2 or 3, at least one of R⁶ is a secondary or tertiary hydrocarbon group, and R⁶'s may be the same or different from each other; and R⁷ is a hydrocarbon group having 1 to 3 carbon atoms, and when (4-n) is 2 or 3, OR⁷'s may be the same or different from each other).

In the organosilicon compound of the formula (II') having a bulky group, examples of the secondary or tertiary hydrocarbon group include a cyclopentyl group, a cyclopentenyl group, a cyclopentadienyl group, a substituted cyclopentyl, cyclopentenyl or cyclopentadienyl group, or a hydrocarbon group wherein the carbon adjacent to Si is secondary or tertiary carbon.

More specifically, examples of the substituted cyclopentyl groups include cyclopentyl groups having alkyl groups, such as 2-methylcyclopentyl group, a 3-methylcyclopentyl group, a 2-ethylcyclopentyl group, a 2-n-butylcyclopentyl group, a 2,3-dimethylcyclopentyl group, a 2,4-dimethylcyclopentyl group, a 2, 5-dimethylcyclopentyl group, a 2,3-diethylcyclopentyl group, a 2,3,4-trimethylcyclopentyl group, a 2,3,5-trimethylcyclopentyl group, a 2,3,4-triethylcyclopentyl group, a tetramethylcyclopentyl group, and a tetraethylcyclopentyl group.

Examples of the substituted cyclopentenyl groups include cyclopentenyl groups having alkyl groups, such as 2-methylcyclopentenyl group, a 3-methylcyclopentenyl group, a 2-ethylcyclopentenyl group, a 2-n-butylcyclopentenyl group, a 2,3-dimethylcyclopentenyl group, a 2,4-dimethylcyclopentenyl group, a 2,5-dimethylcyclopentenyl group, a 2,3,4-trimethylcyclopentenyl group, a 2,3,5-trimethylcyclopentenyl group, a 2,3,4-triethylcyclopentenyl group, a tetramethylcyclopentenyl group, and a tetraethylcyclopentenyl group.

Examples of the substituted cyclopentadienyl groups include cyclopentadienyl groups having alkyl groups, such as 2-methylcyclopentadienyl group, a 3-methylcyclopentadienyl group, a 2-ethylcyclopentadienyl group, a 2-n-butylcyclopentenyl group, a 2,3-dimethylcyclopentadienyl group, a 2,4-dimethylcyclopentadienyl group, a 2,5-dimethylcyclopentadienyl group, a 2,3-diethylcyclopentadienyl group, a 2,3,4-trimethylcyclopentadienyl group, a 2,3,5-trimethylcyclopentadienyl group, a 2,3,4-triethylcyclopentadienyl group, a . 2,3,4,5-tetramethylcyclopentadienyl group, a 2,3,4,5-tetraethylcyclopentadienyl group, a 1,2,3,4,5-pentamethylcyclopentadienyl group, and a 1,2,3,4,5-pentaethylcyclopentadienyl group.

Examples of the hydrocarbon groups wherein the carbon adjacent to Si is secondary carbon include i-propyl, s-butyl, s-amyl and α-methylbenzyl. Examples of the hydrocarbon groups wherein the carbon adjacent to Si is tertiary carbon include t-butyl, t-amyl, α,α'-dimethylbenzyl and adamantyl.

When n is 1, examples of the organosilicon compounds [D-i] represented by the formula (II') include trialkoxysilanes, such as cyclopentyltrimethoxysilane, 2-methylcyclopentyltrimethoxysilane, 2,3-dimethylcyclopentyltrimethoxysilane, cyclopentyltriethoxysilane, iso-butyltriethoxysilane, t-butyltriethoxysilane, cyclohexyltrimethoxysilane, cyclohexyltriethoxysilane, 2-norbornanetrimethoxysilane and 2-norbornanetriethoxysilane. When n is 2, examples of the organosilicon compounds [D-i] include dialkoxysilanes, such as dicyclopentyldiethoxysilane, t-butylmethyldimethoxysilane, t-butylmethyldiethoxysilane, t-amylmethyldiethoxysilane, dicyclohexyldimethoxysilane, cyclohexylmethyldimethoxysilane, cyclohexylmethyldiethoxysilane and 2-norbornanemethyldimethoxysilane.

Among the organosilicon compounds [D-i] represented by the formula (II') wherein n is 2, preferable are dimethoxysilane compounds represented by the following formula (II"): 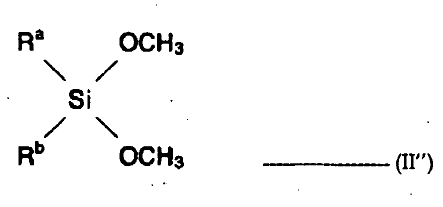 wherein R^{a} and R^{b} are each independently a cyclopentyl group, a substituted cyclopentyl group, a cyclopentenyl group, a substituted cyclopentenyl group, a cyclopentadienyl group, a substituted cyclopentadienyl group or a hydrocarbon group wherein the carbon adjacent to Si is secondary or tertiary carbon.

Examples of the organosilicon compound include dicyclopentyldimethoxysilane, dicyclopentenyldimethoxysilane, dicyclopentadienyldimethoxysilane, di-t-butyldimethoxysilane, di(2-methylcyclopentyl)dimethoxysilane, di(3-methylcyclopentyl-)dimethoxysilane, di(2-ethylcyclopentyl)dimethoxysilane, di(2,3-dimethylcyclopentyl)dimethoxysilane, di(2,4-dimethylcyclopentyl)dimethoxysilane, di(2,5-dimethylcyclopentyl)dimethoxysilane, di(2,3-diethylcyclopentyl)dimethoxysilane, di(2,3,4-trimethylcyclopentyl)dimethoxysilane, di(2,3,5-trimethylcyclopentyl)dimethoxysilane, di(2,3,4-triethylcyclopentyl)dimethoxysilane, di(tetramethylcyclopentyl)dimethoxysilane, di(tetraethylcyclopentyl)dimethoxysilane, di(2-methylcyclopentenyl)dimethoxysilane, di(3-methylcyclopentenyl)dimethoxysilane, di(2-ethylcyclopentenyl)dimethoxysilane, di(2-n-butylcyclopentenyl)dimethoxysilane, di(2,3-dimethylcyclopentenyl)dimethoxysilane, di(2,4-dimethylcyclopentenyl)dimethoxysilane, di(2,5-dimethylcyclopentenyl)dimethoxysilane, di(2,3,4-trimethylcyclopentenyl)dimethoxysilane, di(2,3,5-trimethylcyclopentenyl)dimethoxysilane, di(2,3,4-triethylcyclopentenyl)dimethoxysilane, di(tetramethylcyclopentenyl)dimethoxysilane, di(tetraethylcyclopentenyl)dimethoxysilane, di(2-methylcyclopentadienyl)dimethoxysilane, di(3-methylcyclopentadienyl)dimethoxysilane, di(2-ethylcyclopentadienyl)dimethoxysilane, di(2-n-butylcyclopentenyl)dimethoxysilane, di(2,3-dimethylcyclopentadienyl)dimethoxysilane, di(2,4-dimethylcyclopentadienyl)dimethoxysilane, di(2,5-dimethylcyclopentadienyl)dimethoxysilane, di(2,3-diethylcyclopentadienyl)dimethoxysilane, di(2,3,4-trimethylcyclopentadienyl)dimethoxysilane, di(2,3,5-trimethylcyclopentadienyl)dimethoxysilane, di(2,3,4-triethylcyclopentadienyl)dimethoxysilane, di(2,3,4,5-tetramethylcyclopentadienyl)dimethoxysilane, di (2,3,4,5-tetraethylcyclopentadienyl)dimethoxysilane, di(1,2,3,4,5-pentamethylcyclopentadienyl)dimethoxysilane, di(1,2,3,4,5-pentaethylcyclopentadienyl)dimethoxysilane, di-t-amyl-dimethoxysilane, di(α,α'-dimethylbenzyl)dimethoxysilane, di(adamantyl)dimethoxysilane, adamantyl-t-butyldimethoxysilane, cyclopentyl-t-butyldimethoxysilane, diisopropyldimethoxysilane, dis-butyldimethoxysilane, dis-amyldimethoxysilane, and isopropyl-s-butyldimethoxysilane.

When n is 3, examples of the organosilicon compounds [D-i] include monoalkoxysilanes, such as tricyclopentylmethoxysilane, tricyclopentylethoxysilane, dicyclopentylmethylmethoxysilane, dicyclopentylethylmethoxysilane, dicyclopentylmethylethoxysilane, cyclopentyldimethylmethoxysilane, cyclopentyldiethylmethoxysilane, and cyclopentyldimethylethoxysilane.

Among these, preferable are ethyltriethoxysilane, n-propyltriethoxysilane, t-butyltriethoxysilane, vinyltriethoxysilane, phenyltriethoxysilane, vinyltributoxysilane, diphenyldimethoxysilane, phenylmethyldimethoxysilane, bis-p-tollyldimethoxysilane, p-tollylmethyldimethoxysilane, dicyclohexyldimethoxysilane, cyclohexylmethyldimethoxysilane, 2-norbornenetriethoxysilane, 2-norbornenemethyldimethoxysilane, phenyltriethoxysilane, hexenyltrimethoxysilane, cyclopentyltriethoxysilane, tricyclopentylmethoxysilane, cyclopentyldimethylmethoxysilane, and dimethoxysilanes, particularly preferable is dimethoxysilanes, and specifically preferable are dicyclopentyldimethoxysilane, di-t-butyldimethoxysilane, di(2-methylcyclopentyl)dimethoxysilane, di(3-methylcyclopentyl)dimethoxysilane, and di-t-amyldimethoxysilane. These may be used in combination of two or more kinds thereof. If the electron donor is optionally used in the prepolymerization, and when carrying out prepolymerization, hydrogen can coexist, if desired.

### Component [B]

The component [B] used in the present invention is an organometallic compound. As the organometallic compounds, an organometallic compound containing a metal selected from the metals belonging to Group 1, 2 and 13 is preferable, and specifically, examples of the organometallic compounds include an organoaluminum compound [B₁], an alkyl complex [B₂] of a Group 1 metal with aluminum, and an organometallic compound [B₃] containing a Group 2 metal.

The organoaluminum compound [B₁] is exemplified by the following formula (IV):

R^{a}ₙAlX₃₋ₙ (IV)

(wherein R^{a} is a hydrocarbon group having 1 to 12 carbon atoms, X is halogen or hydrogen atom, and n is 1 to 3. Examples of R^{a} include an alkyl group, a cycloalkyl group or an aryl group, and specifically include methyl, ethyl, n-propyl, isopropyl, isobutyl, pentyl, hexyl, octyl, cyclopentyl, cyclohexyl, phenyl and tolyl. Examples of such organoaluminum compounds include trialkylaluminums, such as trimethylaluminum, triethylaluminum, triisopropylaluminum, triisobutylaluminum, trioctylaluminum and tri-2-ethylhexylaluminum; alkenylaluminums, such as isoprenylaluminum; dialkylaluminum halides, such as dimethylaluminum chloride, diethylaluminum chloride, diisopropylaluminum chloride, diisobutylaluminum chloride and dimethylaluminum bromide; alkylaluminum sesquihalides, such as methylaluminum sesquichloride, ethylaluminum sesquichloride, isopropylaluminum sesquichloride, butylaluminum sesquichloride and ethylaluminum sesquibromide; alkylaluminum dihalides, such as methylaluminum dichloride, ethylaluminum dichloride, isopropylaluminum dichloride and ethylaluminum dibromide; and alkylaluminum hydrides, such as diethylaluminum hydride and diisobutylaluminum hydride.

Further, the compounds represented by the following formula (V) are employable as the organoaluminum compounds:

R^{a}ₙAlY₃₋ₙ (V)

(wherein R^{a} is the same as in the above formula (IV), Y is a -OR^{b} group, a -OSiR^{c}₃ group, a -OAlR^{d}₂ group, a -NR^{e}₂ group, a -SiR^{f}₃ group, or a -N(R^{g})AlR^{h}₂ group; n is 1 to 2; R^{b}, R^{c}, R^{d} and R^{h} are each a methyl group, an ethyl group, an isopropyl group, an isobutyl group, a cyclohexyl group, a phenyl group, or the like; R^{e} is hydrogen atom, a methyl group, an ethyl group, an isopropyl group, a phenyl group, a trimethylsilyl group, or the like; and R^{f} and R^{g} are each a methyl group, an ethyl group, or the like.

Examples of the organoaluminum compounds specifically include the following compounds:
(i) compounds represented by R^{a}ₙAl(OR^{b})₃₋ₙ, for example, dimethylaluminummethoxide, diethylaluminumethoxide, and diisobutylaluminummethoxide.
(ii) compounds represented by R^{a}ₙAl(OSiR_{c})₃₋ₙ, for example, Et₂Al(OSiMe₃), (iso-Bu)₂Al(OSiMe₃), and (iso-Bu)₂Al(OSiEt₃).
(iii) compounds represented by R^{a}ₙAl(OAlR^{d}₂)₃-nEt₂OAlOAlEt₂, for example, (iso-Bu)₂AlOAl(iso-Bu)₂.
(iv) compounds represented by R^{a}ₙAl(NRe₂)₃₋ₙ, for example, Me₂AlNEt₂, Et₂AlNHMe, Me₂AlNHEt, Et₂AlN(Me₃Si)₂, and (iso-Bu)₂AlN(Me₃Si)₂.
(v) compounds represented by R^{a}ₙAl(SiR^{f}₃)₃₋ₙ, for example, (iso-Bu)₂AlSiMe₃.
(vi) compounds represented by R^{a}ₙAl[N (R^{g})-AlR^{h}₂]₃₋ₙ, for example, Et₂AlN(Me)-AlEt₂(iso-Bu)₂AlN(Et)Al(iso-Bu)₂.

Also employable are compounds analogous to the above organoaluminum compounds, for example, organoaluminum compounds wherein two or more aluminum atoms are linked to each other through an oxygen atom or a nitrogen atom. More specifically, examples of such compounds include (C₂H₅)₂AlOAl(C₂H₅)₂, (C₄H₉)₂AlOAl(C₄H₉)₂, and (C₂H₅)₂AlN(C₂H₅)Al(C₂H₅)₂, and aluminoxanes such as methylaluminoxane.

Among the above-described organoaluminum compounds, organoaluminum compounds represented by R^{a}₃Al, R^{a}ₙAl(OR^{b})₃₋ₙ, and R^{a}ₙAl(OAlR^{d}₂)₃₋ₙ are preferably used.

The alkyl complex [B₂] of a Group 1 metal with aluminum is represented by the following formula (VI):

M¹AlR^{j}₄ (VI)

(wherein M¹ is Li, Na, or K, and R^{j} is a hydrocarbon group having 1 to 15 carbon atoms). Specific examples thereof include LiAl(C₂H₅)₄, and LiAl(C₇H₁₅)₄.

The organometallic compound [B₃] of a Group 2 metal is represented by the following formula (VII):

R^{k}R¹M² (VII)

(wherein R^{k}, and R¹ are each a hydrocarbon group having 1 to 15 carbon atoms or halogen atom, and they may be the same or different from each other, provided that both of them are not halogen atom; and M₂ is Mg, Zn, Cd). Specific examples thereof include diethylzinc, diethylmagnesium, butylethylmagnesium, ethylmagnesiumchloride, and butylmagnesiumchloride.

Among these, particularly preferably used is trialkylaluminum. These organometallic compounds may be used in combination of two or more kinds thereof.

### Component [C]

The component [C] of the present invention is an organosilicon compound represented by the following formula (I):

Si(OR¹)₃(NR²R³) (I)

(wherein R¹ is a hydrocarbon group having 1 to 8 carbon atoms, examples of R¹ include an unsaturated or saturated aliphatic hydrocarbon group having 1 to 8 carbon atoms, and particularly preferable is a hydrocarbon group having 2 to 6 carbon atoms). Specific examples thereof include a methyl group, an ethyl group, an n-propyl group, an iso-propyl group, an n-butyl group, an iso-butyl group, a tert-butyl group, a sec-butyl group, an n-pentyl group, an iso-pentyl group, a cyclopentyl group, an n-hexyl group, and a cyclohexyl group. Particularly preferable is an ethyl group,

R² is a hydrocarbon group having 1 to 12 carbon atoms or hydrogen atom, and examples thereof include an unsaturated or saturated aliphatic hydrocarbon group having 1 to 12 carbon atoms, and hydrogen atom. Specific examples thereof include hydrogen atom, a methyl group, an ethyl group, an n-propyl group, an iso-propyl group, an n-butyl group, an iso-butyl group, a tert-butyl group, a sec-butyl group, an n-pentyl group, an iso-pentyl group, a cyclopentyl group, an n-hexyl group, a cyclohexyl group, and an octyl group. Particularly preferable is an ethyl group.

R³ is a hydrocarbon group having 1 to 12 carbon atoms, and examples thereof include an unsaturated or saturated aliphatic hydrocarbon group having 1 to 12 carbon atoms. Specific examples thereof include a methyl group, an ethyl group, an n-propyl group, an iso-propyl group, an n-butyl group, an iso-butyl group, a tert-butyl group, a sec-butyl group, an n-pentyl group, an iso-pentyl group, a cyclopentyl group, an n-hexyl group, a cyclohexyl group, and an octyl group. Particularly preferable is an ethyl group.

As the component [C], preferable is at least one selected from dimethylaminotriethoxysilane, diethylaminotriethoxysilane, diethylaminotrimethoxysilane, diethylaminotri-n-propoxysilane, di-n-propylaminotriethoxysilane, methyl-n-propylaminotriethoxysilane, t-butylaminotriethoxysilane, ethyl-n-propylaminotriethoxysilane, ethylisopropylaminotriethoxysilane, and methylethylaminotriethoxysilane. These organosilicon compounds may be used alone, or in combination of two or more kinds thereof.

For the organosilicon compounds constituting the catalyst for olefin polymerization of the present invention, the organosilicon compound [C] may be used in combination with the organosilicon compound [D] as described in the section regarding prepolymerization in the preparation of the component [A]. In the case of the use in combination with the organosilicon compound [D], the component [C] and the component [D] may be preliminarily mixed, or separately added to the polymerization system for use. The mixing molar ratio of [Component [C] / {Component [C] + Component [D]} is from 0.5 to 1.0, preferably 0.75 to 1.0, and particularly preferably 0.9 to 1.0.

Next, a method for preparing the olefinic polymer of the present invention by carrying out main polymerization in the presence of the above-described catalyst for olefin polymerization will be described in detail.

### Method for producing an olefinic polymer

As the main polymerization method in the present invention, a solvent polymerization method using an inert medium, a bulk polymerization method using the monomers as a liquid solvent, a vapor phase polymerization method for polymerizing the monomers in the vapor state, or a combination thereof can be used. In the main polymerization of the present invention, polymerization or copolymerization of olefins is carried out in the presence of the prepolymer [A], the organometallic compound component [B], and the organosilicon compound [C], and if necessary, the organosilicon compound [D] to obtain an olefinic polymer powder. Further, in the case where the olefinic polymer powder is used in the specific applications in which particular qualities in view of the nature and state of the powder, the stereoregularity, or MFR are not required, the prepolymer [A] is not necessarily used, and the solid titanium catalyst component [A'] may be used instead of the prepolymer [A].

In the present invention, the olefins which can be used in the polymerization reaction are at least one monomer selected from ethylene and α-olefins, and at least one monomer is preferably ethylene or propylene. Examples of the α-olefins include straight-chain or branched-chain α-olefins having 3 to 20 carbon atoms, and preferably 3 to 10 carbon atoms, such as propylene, 1-butene, 2-butenes, 1-pentene, 3-methyl-1-butene, 1-hexene, 4-methyl-1-pentene, 3-methyl-pentene, 1-octene, 1-decene, 1-dodecene, 1-tetradecene, 1-hexadecene, 1-octadecene, 1-eicosene, and the like. Also, in the polymerization method of the invention, mention may be made of cyclic olefins having 3 to 30 carbon atoms, and preferably 3 to 20 carbon atoms, such as cyclopentene, cycloheptene, norbornene, 5-methyl-2-norbornene, tetracyclodecene, 2-methyl-1,4,5,8,-dimethanol-1,2,3,4,4a,5,8,8a-octahydronaph thalene; polar monomers, for example, α,β-unsaturated carboxylic acids such as acrylic acid, methacrylic acid, fumaric acid, maleic anhydride, itaconic acid, itaconic anhydride and bicyclo(2,2,1)-5-heptene-2,3-dicarboxylic anhydride, and metal salts thereof such as a sodium salt thereof, a potassium salt thereof, a lithium salt thereof, a zinc salt thereof, a magnesium salt thereof and a calcium salt thereof; α,β-unsaturated carboxylic acid esters such as methyl acrylate, ethyl acrylate, n-propyl acrylate, isopropyl acrylate, n-butyl acrylate, isobutyl acrylate, t-butyl acrylate, 2-ethylhexyl acrylate, methyl methacrylate, ethyl methacrylate, n-propyl methacrylate, isopropyl methacrylate, n-butyl methacrylate and isobutyl methacrylate; vinyl ester such as vinyl acetate, vinyl propionate, vinyl capronate, vinyl caprate, vinyl laurate, vinyl stearate and vinyl trifluoroacetate; unsaturated glycidyls such as glycidyl acrylate, glycidyl methacrylate and monoglycidyl itaconate esters; and the like. Also, polymerization may proceed under the coexistence, in the reaction system, of aromatic vinyl compounds such as vinyl cyclohexane, diene or polyene;, for example, such as mono or polyalkylstyrene such as styrene, o-methylstyrene, m-methylstyrene, p-methylstyrene, o,p-dimethyl styrene, o-ethyl styrene, m-ethyl styrene and p-ethyl styrene; styrene derivatives containing a functional group such as methoxy styrene, ethoxystyrene, vinylbenzoate, methyl vinylbenzoate, vinylbenzyl acetate, hydroxystyrene, o-chlorostyrene, p-chlorostyrene, divinylbenzene, and the like; and 3-phenylpropylene, 4-phenylpropylene, α-methylstyrene, and the like.

The amount of the component [C], or the total amount of the component [C] and the component [D] to be used in the main polymerization is such that the elemental ratio of the silicon atoms to the aluminum atoms (Si/Al) of the component [B₁] is preferably 0.01 to 1.0, and particularly preferably 0.05 to 0.7.

In the present invention, upon main polymerization, if the organoaluminum compound [B₁] is used as the catalyst component [B], the amount of the component [B₁] to be used is such that the molar ratio of A1/Ti is 10 to 800, and preferably 30 to 400 in terms of the titanium atoms of the component [A].

In the process for producing an olefinic polymer by the main polymerization according to the present invention, a chain transfer agent such as hydrogen molecule can be used. The amount of hydrogen molecule to be used for preparing an olefinic polymer having desired stereoregularity, a melting point and a molecular weight can be appropriately determined according to the polymerization method and the polymerization conditions.

The standard polymerization performances using the catalyst for olefin polymerization of the present invention are as follows: for example, in the preparation of polypropylene (PP) using propylene alone as an olefin, if bulk polymerization of propylene in the presence of hydrogen is carried out for 1.0 hours under the fixed conditions of a temperature of 69 to 71°C, and a pressure of 3.8 MPa/G, the polypropylene (PP) has an MFR (230°C, under a load of 2.16 kg) of 300 g/10 min or more; an mmmm fraction of the methyl group arrangement (dd or 11 referred to as m) of five continuous propylene monomer units, as measured by ¹³C-NMR, of 97.3% or more; and a catalyst activity of 30,000g-PP/g-cat.hr or more. Even in the case of using monomers other than propylene as an olefin, if the polymerization conditions are fixed as described above, an olefinic polymer having high stereoregularity with comparable activity as in the above-described PP is obtained. Further, according to the method for preparing an olefinic polymer of the present invention, a high-purity olefinic polymer is provided, which has a content of magnesium oxide remaining in the obtained olefinic polymer, as measured by an ashing method, of 30 ppm by weight or less, a preferably 20 ppm by weight or less.

In the present invention, a homopolymer of an olefin may be produced, or otherwise a random copolymer or a block copolymer, from two or more kinds of olefins may be produced. The polymerization method of the present invention is particularly suitable for the production of a polymer having high stereoregularity from propylene alone; the production of a random copolymer from propylene, and at least one comonomer selected from ethylene and olefins having 4 to 20 carbon atoms, which has a low content of the n-decane soluble fractions; or the production of a block copolymer having a high content of the comonomers such as ethylene. The olefin polymerization catalyst of the present invention is characterized by provision of a homopolymer having high stereoregularity and high fluidity (that is, high MFR), and this characteristic is sufficiently exhibited when applied, particularly in the preparation of a block polypropylene. That is, one preferable embodiment of the method for preparing an olefinic polymer of the present invention is a polymerization method comprising sequencing carrying out a step of homopolymerizing propylene, and a step of copolymerization of propylene, and at least one comonomer selected from ethylene and α-olefins having 4 or more atoms. By this multi-stage polymerization method, a block polypropylene can be produced, in which
[a'] the amount of the normal decane-soluble fraction at room temperature is 5.0% by weight or more, preferably 5.0 to 35% by weight, more preferably 6.5 to 30% by weight, and particularly preferably 8.0 to 25% by weight;
[b'] the intrinsic viscosity of the normal decane-soluble fraction at room temperature is 2.0 dl/g or more, preferably 2.0 to 10 dl/g, more preferably 2.0 to 9 dl/g; and
[c'] the homopolymer of propylene after completion of the step of homopolymerizing propylene, has an amount of the normal decane-soluble fraction at room temperature of 1.0% by weight or less, preferably 0.85% by weight or less, and more preferably 0.7% by weight or less, an mmmm fraction of 97.5% or more, and preferably 97.6% or more, and an MFR (230°C, under a load of 2.16 kg) of 150 g/10 min or more, preferably 150 g/10 min to 500 g/10 min, and more preferably 170 g/10 min to 500 g/10 min.

In the block polypropylene satisfying these requirements [a'] to [c'], the previous state [the homopolymerization step] yields the homopolypropylene having high fluidity and high stereoregularity, and thus the relative weight of the copolymer part (rubber part) produced in the later stage [the copolymerization step] can be increased, relative to the total block polypropylene, that is, the block polypropylene can have an "enhanced rubber content". As a result, the reduction or disuse of a later-added rubber can be attained in some applications, which had been conventionally conducted in order to improve impact resistance, required usually in the field of the automotive members. This can be considered to give great influence on the industry, by bring out simplified process for rubber modification which had been conventionally conducted, or even elimination of the process for rubber modification of polypropylene.

Among the block polypropylenes satisfying the requirements [a'] to [c'], the block polypropylene satisfying the following requirements [a] to [c] is a block polypropylene which can be produced using the catalyst for olefin polymerization of the present invention for the first time, thus it expectedly promoting its use as a high rubber content block polypropylene:
[a] the amount of the normal decane-soluble fraction at room temperature is 5.0 to 35% by weight, preferably 6.5 to 30% by weight, and particularly preferably 8.0 to 25% by weight;
[b] the intrinsic viscosity of the normal decane-soluble fraction at room temperature is 2.0 to 10 dl/g, and preferably 2.0 to 9 dl/g; and
[c] the homopolymer of propylene after completion of the step of homopolymerizing propylene, has an amount of the normal decane-soluble fraction at room temperature of 1.0% by weight or less, preferably 0. 85% by weight or less, and more preferably 0.7% by weight or less, an mmmm fraction of 97.5% or more, and preferably 97.6% or more, and an MFR (230°C, under a load of 2.16 kg) of 200 g/10 min or more, and preferably 200 g/10 min to 500 g/10 min.

To thus obtained propylene-based polymer powders, a variety of additives such as an antioxidant, a UV absorbent, an antistatic agent, a nucleating agent, a lubricant, a flame retardant, an antiblocking agent, a coloring agent, an inorganic or organic filler, and various synthetic resins can be mixed, if desired, and the mixture was melt-kneaded, and pelletized into a pellet, thereby giving the material for the manufacture of various molded articles.

Further, to the olefinic polymer of the present invention, an elastomer and an inorganic filler may be added. Examples of the elastomer include an ethylene/α-olefin random copolymer, an ethylene/α-olefin/non-conjugated polyene random copolymer, a hydrogenated block copolymer, and other elastic polymers, and a mixture thereof. Here, examples of the filler include talc, clay, calcium carbonate, mica, silicates, carbonates, and glass fiber. Among these, preferable are talc and calcium carbonate, and particularly preferable is talc. The talc preferably has an average particle size in the range of 1 to 5 µm, and preferably 1 to 3 µm. These fillers may be used alone, or in combination of two or more kinds thereof.

For blending a predetermined amount of the above-described additives with the olefinic polymer of the present invention, a usual kneading device such as a Henschel mixer, a Ribbon blender, and a Banbury mixer can be used. For melt-kneading and pelletizing, a single-screw extruder or a twin-screw extruder, a Brabender, or a roll is used at 170 to 300°C, and preferably 190 to 250°C to carry out melt-kneading and pelletizing. The obtained propylene copolymer composition can be processed into a desired molded article such as automotives, domestic electric appliances, and others, films for retorting, etc., sheets, blow molded products, and injection blow molded products, obtained by performing various molding methods including an injection molding method, an extrusion molding method, an injection blow molding method, and a blow molding method.

### EXAMPLE

The present invention will be further described with reference to the following examples, but it should be construed that the invention is in no way limited to those Examples. Measurement of the various properties provided in the Examples was made as follows.

### ★ Melt flow rate (MFR)

All the MFR values are determined according to a method of ASTM D-1238 under the conditions of a temperature of 230°C and a load of 2.16 kg.

### ★ Meso pentad fraction (mmmm)

As one index indicating the stereoregularity of a polymer, the meso pentad fraction (mmmm, %) examining the microtacticity was calculated from the peak intensity ratio of the ¹³C-NMR spectrum, as described in Macromolecules 8, 687 (1975), in the propylene polymer. ¹³C-NMR spectrum was measured using a Jeol EX400 device, based on TMS, at a temperature of 130°C, using o-dichlorobenzene as a solvent.

### ★ Amount of the n-decane-soluble fraction at room temperature (Dₛₒₗ), and Intrinsic viscosity of the n-decane-soluble fraction (D_{[η]})

A sample was heated and dissolved in normal decane. The solution was cooled to room temperature, and then a precipitate was separated from normal decane by filtration. The filtrate was put into acetone for precipitation. The precipitate was separated from acetone by filtration, and the combined precipitate was then dried.

Amount of n-decane-soluble fraction (wt%) = [weight of precipitate/weight of sample] x 100

The intrinsic viscosity was measured at 135°C in decalin.

### ★ Content of magnesium oxide (ashing method)

The polymer was completely ashed using a magnetic furnace, dissolved in hydrochloric acid, and measured by means of a Hitachi polarized Zeeman spectrophotometer Z-8200.

### [Example 1]

### [1] Preparation of solid titanium catalyst component

### [1-i] Preparation of solid component

A high-speed mixer with an internal volume of 2 liter (manufactured by Tokushu Kika Kogyo K. K.) was thoroughly purged with nitrogen gas, and 700 ml of purified kerosine, 10 g of commercial available magnesium chloride, 24.2 g of ethanol and 3 g of Emasol 320 (sorbitan distearate, a product of Kao-Atlas K. K.) were placed therein. While stirring the mixture, the temperature thereof was elevated and the mixture was stirred at 120°C and 800 rpm for 30 minutes. Under the high-speed stirring, the resulting solution was transferred to a 2-liter glass flask (equipped with a stirrer) which was previously charged with 1 liter of purified kerosine cooled to -10°C by using a Teflon (registered trademark) tube having an inner diameter of 5 mm. The resulting solid was collected by filtration and thoroughly washed with purified n-hexane to obtain a solid adduct in which ethanol coordinated to magnesium chloride.

The solid adduct was suspended in 548 ml of decane, and 825 mmol, in terms of magnesium atoms, of the whole amount of the suspension was introduced to 2.2 liters of titanium tetrachloride maintained at -20°C under stirring. The temperature of the mixture was then elevated to 110°C over 5.5 hours, and at a time when the temperature reached 110°C, 33.0 ml of diisobutylphthalate was added thereto. Then, the mixture was stirred at 110°C for 1.5 hours. After completion of the reaction for 1.5 hours, the solid fraction was collected by hot filtration, and washed with decane at 100°C and hexane at room temperature until titanium in the filtrate was no longer detected.

### [1-ii] Preparation of solid titanium catalyst component (Contact with polar compound)

To a 6-liter glass reactor which had been thoroughly purged with nitrogen gas, were added 4.1 liters of 2,4-dichlorotoluene, 123.6 ml (1124.8 mmol) of titanium tetrachloride, and 15.1 ml (56.4 mmol) of diisobutylphthalate, and then 133.7 g of the solid component obtained in the [1-i] step. Thereafter, the temperature in the reactor was elevated to 130 °C, and the mixture was stirred at that temperature for 1 hour. After 1 hour of contact treatment, the solid fraction was collected by hot filtration, the solid fraction was resuspended in 4.1 liters of 2,4-dichlorotoluene, and to the suspension, were added 123. 6 ml (1124.8 mmol) of titanium tetrachloride and 15.1ml (56.4 mmol) of diisobutylphthalate. Thereafter, at a time when the temperature of the mixture reached 130°C, the mixture was maintained under stirring for 1 hour.

After completion of the reaction, the solid and liquid fractions were separated from each other by hot filtration gain, and then the solid fraction was washed with decane at 100°C and hexane at room temperature until the content of 2,4-dichlorotoluene in the catalyst was 1% by weight or less. As result, a solid titanium catalyst component containing 1.3% by weight of titanium, 20% by weight of magnesium, and 14.7% by weight of diisobutylphthalate is obtained, wherein the ratio of the electron donor/titanium (the weight ratio) was 11.3.

### [2] Preparation of prepolymerized catalyst

Into a 1-liter autoclave which had been purged with nitrogen gas, 180 ml of n-heptane was charged, cooled to 0°C, and then into the autoclave, 6.3 mmol of triethylaluminum (TEA), 9.95 g of propylene, and 0.9 mmol, in terms of titanium atoms, of the solid titanium catalyst component which had been prepared in the step of [1] Preparation of solid catalyst component were charged. Then, the autoclave was tightly closed to perform the reaction at 20°C for 1 hour under stirring. After completion of the polymerization, the reaction mixture was taken out under nitrogen gas atmosphere, and the liquid fraction was removed by decantation. The resultant fraction was three times washed with decane, and thus obtained prepolymerized catalyst was resuspended in decane. The amount of prepolymerization was 3.0 g per 1 g of the solid titanium catalyst component.

### [3] Main polymerization

A fully equipped, 5-liter autoclave was purged with hydrogen molecule, and into the autoclave, 1500 g of propylene was charged. After the temperature of propylene was elevated to 60°C, 50 ml of n-heptane, 0.41 mmol of triethylaluminum, 0.081 mmol of diethylaminotriethoxysilane, and 10 mg of the prepolymerized catalyst [A-1] which had been prepared in the step of [2] Preparation of prepolymerized catalyst as a solid catalyst component were mixed therewith, and the mixture was injected to the autoclave with hydrogen molecule. The temperature of the autoclave was adjusted to 70°C, and during the polymerization, the pressure was maintained at 3.8 MPa/G with hydrogen molecule. The polymerization was carried out for 1 hour. After completion of the polymerization, the resultant solid-containing slurry was filtered to separate the slurry into a white powder and a liquid fraction. The yield of the obtained polymer in the white powder form was 396.8g. The results of MFR and stereoregularity (mmmm) are shown in Table 1.

### [Example 2]

The polymerization was carried·out in the same manner as in Example 1, except that the process of [3] Main polymerization in Example 1 is changed as follows.

### [3] Main polymerization

A fully equipped, 5-liter autoclave was purged with hydrogen molecule, and into the autoclave, 1500 g of propylene was charged. After the temperature of propylene was elevated to 60°C, 50 ml of n-heptane, 0.41 mmol of triethylaluminum, 0.078 mmol of diethylaminotriethoxysilane, 0.0032 mmol of dicyclopentyldimethoxysilane, and 10 mg of the prepolymerized catalyst which had been prepared in the step of [2] Preparation of prepolymerized catalyst in Example 1 as a solid catalyst component were mixed therewith, and the mixture was injected to the autoclave with hydrogen molecule. The temperature of the autoclave was adjusted to 70°C, and during the polymerization, the pressure was maintained at 3.8 MPa/G with hydrogen molecule. The polymerization was carried out for 1 hour. After completion of the polymerization, the resultant solid-containing slurry was filtered to separate the slurry into a white powder and a liquid fraction. The yield of the obtained polymer in the white powder form was 395.4 g.

The results of MFR and stereoregularity (mmmm) are shown in Table 1.

### [Example 3]

The polymerization was carried out in the same manner as in Example 1, except that the step of [2] Preparation of prepolymerized catalyst in Example 1 is changed as follows.

### [2]-Preparation of prepolymerized catalyst

Into a 1-liter autoclave which had been purged with nitrogen gas, 180 ml of n-heptane was charged, cooled to 0°C, and then into the autoclave, 9.0 mmol of triethylaluminum (TEA), 0. 09 mmol of dicyclopentyldimethoxysilane, 9.95 g of propylene, and 0.9 mmol, in terms of titanium atoms, of the solid titanium catalyst component [A] which had been prepared in the step of [1] Preparation of solid catalyst component of Example 1 were charged. Then, the autoclave was tightly closed to perform the reaction at 20°C for 1 hour under stirring. After completion of the polymerization, the reaction mixture was taken out under nitrogen gas atmosphere, and the liquid fraction was removed by decantation. The resultant fraction was three times washed with decane, and thus obtained prepolymerized catalyst was resuspended in decane. The amount of prepolymerization was 3.0 g per 1 g of the solid titanium catalyst component.

### [3] Main polymerization

The yield of the obtained polymer in the white powder form was 411.5 g.

The measurement results of MFR and stereoregularity (mmmm) are shown in Table 1.

### [Comparative Example 1]

### [3] Main polymerization

The polymerization was carried out in the same manner as in Example 1, except that cyclohexylmethyldimethoxysilane was used instead of diethylaminotriethoxysilane in the main polymerization of Example 1. The yield of the obtained polymer in the white powder form was 376.2 g. The measurement results of MFR and stereoregularity (mmmm) are shown in Table 1.

### [Comparative Example 2]

### [3] Main polymerization

The polymerization was carried out in the same manner as in Example 1, except that dicyclopentyldimethoxysilane was used instead of diethylaminotriethoxysilane in the main polymerization of Example 1. The yield of the obtained polymer in the white powder form was 532.4 g. The measurement results of MFR and stereoregularity (mmmm) are shown in Table 1.

### [Comparative Example 3]

### [1] Preparation of solid titanium catalyst component

### [1-i] Preparation of solid component

A high-speed mixer with an internal volume of 2 liter (manufactured by Tokushu Kika Kogyo K. K.) was thoroughly purged with nitrogen gas, and 700 ml of purified kerosine, 10 g of commercial available magnesium chloride, 24.2 g of ethanol and 3 g of Emasol 320 (sorbitan distearate, a product of Kao-Atlas K. K.) were placed therein. While stirring the mixture, the temperature thereof was elevated and the mixture was stirred at 120°C and 800 rpm for 30 minutes. Under the high-speed stirring, the resulting solution was transferred to a 2-liter glass flask (equipped with a stirrer) which was previously charged with 1 liter of purified kerosine cooled to -10°C by using a Teflon (registered trademark) tube having an inner diameter of 5 mm. The resulting solid was collected by filtration and thoroughly washed with purified n-hexane to obtain a solid adduct in which ethanol coordinated to magnesium chloride.

The solid adduct was suspended in 50 ml of decane, and 75 mmol, in terms of magnesium atoms, of the whole amount of the suspension was introduced to 200 ml of titanium tetrachloride maintained at -20°C. The temperature of the mixture was then elevated to 110°C over 5.5 hours, and at a time when the temperature reached 110°C, 3.0 ml (11.25 mmol) of diisobutylphthalate and 0.026 ml (0.11 mmol) of 2-isobutyl-2-isopropyl-1,3-dimethoxypropane were added thereto. Then, the mixture was stirred at 110°C for 1.5 hours. After completion of the reaction for 1.5 hours, the solid fraction was collected by hot filtration, and washed with decane at 100°C and hexane at room temperature until titanium in the filtrate was no longer detected.

### [1-ii] Preparation of solid titanium catalyst component (Contact with polar compound)

To a 200-ml glass reactor which had been thoroughly purged with nitrogen gas, were added 150 ml of 2, 4-dichlorotoluene, 4.5 ml (40. 9 mmol) of titanium tetrachloride, and 0.55 ml (2.06 mmol) of diisobutylphthalate, and then 4.56 g of the solid component obtained in the [1-i] step. Thereafter, the temperature in the reactor was elevated to 130°C, and the mixture was stirred at that temperature for 1 hour. After 1 hour of contact treatment, the solid fraction was collected by hot filtration, the solid fraction was resuspended in 150 ml of 2,4-dichlorotoluene, and to the suspension, were added 4.5 ml (40.9 mmol) of titanium tetrachloride and 0.55 ml of diisobutylphthalate. Thereafter, at a time when the temperature of the mixture reached 130°C, the mixture was maintained under stirring for 1 hour.

After completion of the reaction, the solid and liquid fractions were separated from each other by hot filtration again, and then the solid fraction was washed with decane at 100°C and hexane at room temperature until the content of 2,4-dichlorotoluene in the catalyst was 1% by weight or less. As result, a solid titanium catalyst component containing 1.3% by weight of titanium, 21% by weight of magnesium, and 14.4% by weight of diisobutylphthalate, wherein the ratio of the electron donor/titanium (the weight ratio) was 11.1.

### [2] Preparation of prepolymerized catalyst

Into a 1-liter autoclave which had been purged with nitrogen gas, 180 ml of n-heptane was charged, cooled to 0°C; and then into the autoclave, 1.35 mmol of triethylaluminum (TEA), 9.95 g of propylene, and 0.9 mmol, in terms of titanium atoms, of the solid titanium catalyst component which had been prepared in the step of [1] Preparation of solid catalyst component were charged. Then, the autoclave was tightly closed to perform the reaction at 20°C for 1 hour under stirring. After completion of the polymerization, the reaction mixture was taken out under nitrogen gas atmosphere, and the liquid fraction was removed by decantation. The resultant fraction was three times washed with decane, and thus obtained prepolymerized catalyst was resuspended in decane. The amount of prepolymerization was 3.0 g per 1 g of the solid titanium catalyst component.

### [3] Main polymerization

A fully equipped, 5-liter autoclave was purged with hydrogen molecule, and into the autoclave, 1500 g of propylene was charged. After the temperature of propylene was elevated to 60°C, 50 ml of n-heptane, 0.41 mmol of triethylaluminum, 0. 081 mmol of diethylaminotriethoxysilane, and 10 mg of the prepolymerized catalyst which had been prepared in the step of [2] Preparation of prepolymerized catalyst as a solid catalyst component were mixed therewith, and the mixture was injected to the autoclave with hydrogen molecule. The temperature of the autoclave was adjusted to 70°C, and during the polymerization, the pressure was maintained at 3.8 MPa/G with hydrogen molecule. The polymerization was carried out for 1 hour. After completion of the polymerization, the resultant solid-containing slurry was filtered to separate the slurry into a white powder and a liquid fraction. The yield of the obtained polymer in the white powder form was 417.7 g. The results of MFR and stereoregularity (mmmm) are shown in Table 1.

### [Comparative Example 4]

The polymerization was carried out in the same manner as in Comparative Example 3, except that the process of [3] Main polymerization in Comparative Example 3 is changed as follows.

### [3] Main polymerization

A fully equipped, 5-liter autoclave was purged with hydrogen molecule, and into the autoclave, 1500 g of propylene was charged. After the temperature of propylene was elevated to 60°C, 50 ml of n-heptane, 0.41 mmol of triethylaluminum, 0.078 mmol of diethylaminotriethoxysilane, 0.0032 mmol of dicyclopentyldimethoxysilane, and 10 mg of the prepolymerized catalyst which had been prepared in the step of [2] Preparation of prepolymerized catalyst as a solid catalyst component were mixed therewith, and the mixture was injected to the autoclave with hydrogen molecule. The temperature of the autoclave was adjusted to 70°C, and during the polymerization, the pressure was maintained at 3.8 MPa/G with hydrogen molecule. The polymerization was carried out for 1 hour. After completion of the polymerization, the resultant solid-containing slurry was filtered to separate the slurry into a white powder and a liquid fraction. The yield of the obtained polymer in the white powder form was 475.1g. The results of MFR and stereoregularity (mmmm) are shown in Table 1.

### [Example 4]

The polymerization was carried out in the same manner as in Example 1, except that the steps of [2] Preparation of prepolymerized catalyst and [3] Main polymerization in Example 1 are changed as follows.

### [2] Preparation of prepolymerized catalyst

Into an autoclave with an internal volume of 15 liters, equipped with a stirrer, 49 g of the solid titanium catalyst component which had been prepared in the step of [1] Preparation of solid catalyst component in Example 1, 13.6 ml of triethylaluminum, and 7 liters of n-heptane were charged, and the internal temperature was maintained at 5°C, 490 g of propylene was introduced thereto, and the mixture was reacted for 60 minutes under stirring. After completion of the polymerization, the solution was transferred to an autoclave with an internal volume of 200 ml, equipped with a stirrer, n-heptane was added thereto to settle down the solid fraction. Removal of the supernatant, and washing with n-heptane were twice carried out. Thus obtained prepolymerized catalyst was resuspended in purified n-heptane, and adjusted to a transition metal catalyst component concentration of 0.7g/L with n-heptane. The amount of prepolymerization was 10 g per 1 g of the solid titanium catalyst component.

### [3] Main polymerization

A loop reactor with an internal volume of 58 liters was continuously supplied with 30 kg/hr of propylene, 105 NL/hr of hydrogen molecule, 0.25 g/hr, in terms of the solid catalyst component, of a prepolymerized catalyst slurry, 2.38 ml/hr of triethylaluminum, and 0.89 ml/hr of diethylaminotriethoxysilane, and polymerization was carried out in a full liquid state free of gas phase. The temperature and the pressure of the loop reactor were 70°C and 3.4 MPa/G, respectively.

The obtained slurry was transferred to a vessel polymerization reactor with an internal volume of 100 liters, equipped with a stirrer, and was further subjected to polymerization. The polymerization reactor was supplied with 15 kg/hr of propylene, and 120 NL/hr of hydrogen molecule, and polymerization was carried out at a polymerization temperature of 70°C, and a pressure of 3.1 MPa/G.

The obtained slurry was transferred to an interposed tube with an internal volume of 2.4 liters. The slurry was gasified, and the gas and solid phases were separated with each other. Then, to a 480-liter, gas phase polymerization reactor, the polypropylene homopolymer powder was transferred, and ethylene/propylene block copolymerization was carried out. The gas phase polymerization reactor was continuously supplied with propylene, ethylene, and hydrogen molecule, so that the gas composition in the gas phase polymerization reactor was as follows: ethylene/(ethylene + propylene) = 0.21 (molar ratio), and hydrogen molecule/(ethylene + propylene) = 0.0011 (molar ratio). Polymerization was carried out at a polymerization temperature of 70°C, and a pressure of 0.46 MPa/G. The polymerization results are shown in Table 2.

### [Example 5]

The polymerization was carried out in the same manner as in Example 1, except that the steps of [2] Preparation of prepolymerized catalyst and [3] Main polymerization in Example 1 are changed as follows.

### [2] Preparation of prepolymerized catalyst

Into an autoclave with an internal volume of 15 liters, equipped with a stirrer, 56 g of the solid titanium catalyst component which had been prepared in the step of [1] Preparation of solid catalyst component in Example 1, 19.2 ml of triethylaluminum, 0.7 ml of dicyclopentyldimethoxysilane, and 8 liters of n-heptane were introduced, and the internal temperature was maintained at 5°C, 560 g of propylene was introduced thereto, and the mixture was reacted for 60 minutes under stirring. After completion of the polymerization, the solution was transferred to an autoclave with an internal volume of 200 ml, equipped with a stirrer, n-heptane was added thereto to settle down the solid fraction. Removal of the supernatant, and washing with n-heptane were twice carried out. Thus obtained prepolymerized catalyst was resuspended in purified n-heptane, and adjusted to a transition metal catalyst component concentration of 0.7g/L with n-heptane. The amount of prepolymerization was 10 g per 1 g of the solid titanium catalyst component.

### [3] Main polymerization

A loop reactor with an internal volume of 58 liters was continuously supplied with 30 kg/hr of propylene, 177 NL/hr of hydrogen molecule, 0.24 g/hr, in terms of the solid catalyst component, of a prepolymerized catalyst slurry, 2.28 ml/hr of triethylaluminum, and 0.86 ml/hr of diethylaminotriethoxysilane, and polymerization was carried out in a full liquid state free of gas phase. The temperature and the pressure of the loop reactor were 70°C and 3.5 MPa/G, respectively.

The obtained slurry was transferred to a vessel polymerization reactor with an internal volume of 100 liters, equipped with a stirrer, and was further subjected to polymerization. The polymerization reactor was supplied with 15 kg/hr of propylene, and 152 NL/hr of hydrogen molecule, and polymerization was carried out at a polymerization temperature of 68°C, and a pressure of 3.3 MPa/G.

The obtained slurry was transferred to an interposed tube with an internal volume of 2.4 liters. The slurry was gasified, and the gas and solid phases were separated with each other. Then, to a 480-liter, gas phase polymerization reactor, the polypropylene homopolymer powder was transferred, and ethylene/propylene block copolymerization was carried out. The gas phase polymerization reactor was continuously supplied with propylene, ethylene, and hydrogen molecule, so that the gas composition in the gas phase polymerization reactor was as follows: ethylene/(ethylene + propylene) = 0.21 (molar ratio), and hydrogen molecule/(ethylene + propylene) = 0.0007 (molar ratio). Polymerization was carried out at a polymerization temperature of 70°C, and a pressure of 1.2 MPa/G. The polymerization results are shown in Table 2.

### [Comparative Example 5]

The polymerization was carried out in the same manner as in Example 4, except that the process of [3] Main polymerization in Example 4 is changed as follows.

### [3] Main polymerization

A loop reactor with an internal volume of 58 liters was continuously supplied with 30 kg/hr of propylene, 223 NL/hr of hydrogen molecule, 0.27 g/hr, in terms of the solid catalyst component, of a prepolymerized catalyst slurry, 2.50 ml/hr of triethylaluminum, and 0.73 ml/hr of cyclohexylmethyldimethoxysilane, and polymerization was carried out in a full liquid state free of gas phase. The temperature and the pressure of the loop reactor were 70°C and 3.6 MPa/G, respectively.

The obtained slurry was transferred to a vessel polymerization reactor with an internal volume of 100 liters, equipped with a stirrer, and was further subjected to polymerization. The polymerization reactor was supplied with 15 kg/hr of propylene, and 128 NL/hr of hydrogen molecule, and polymerization was carried out at a polymerization temperature of 67.9°C, and a pressure of 3.4 MPa/G.

The obtained slurry was transferred to an interposed tube with an internal volume of 2.4 liters. The slurry was gasified, and the gas and solid phases were separated with each other. Then, to a 480-liter, gas phase polymerization reactor, the polypropylene homopolymer powder was transferred, and ethylene/propylene block copolymerization was carried out. The gas phase polymerization reactor was continuously supplied with propylene, ethylene, and hydrogen molecule, so that the gas composition in the gas phase polymerization reactor was as follows: ethylene/(ethylene + propylene) = 0.29 (molar ratio), and hydrogen molecule/(ethylene + propylene) = 0.0017 (molar ratio). Polymerization was carried out at a polymerization temperature of 70°C, and a pressure of 0.68 MPa/G. The polymerization results are shown in Table 2.

### [Comparative Example 6]

The polymerization was carried out in the same manner as in Comparative Example 3, except that the steps of [2] Preparation of prepolymerized catalyst and [3] Main polymerization in Comparative Example 3 are changed as follows.

### [2] Preparation of prepolymerized catalyst

Into an autoclave with an internal volume of 15 liters, equipped with a stirrer, 56 g of the solid titanium catalyst component which had been prepared in the step of [1] Preparation of solid catalyst component in Comparative Example 3, 5.5 ml of triethylaluminum, and 8 liters of n-heptane were introduced, and the internal temperature was maintained at 5°C, 560 g of propylene was introduced thereto, and the mixture was reacted for 60 minutes under stirring. After completion of the polymerization, the solution was transferred to an autoclave with an internal volume of 200 ml, equipped with a stirrer, n-heptane was added thereto to settle down the solid fraction. Removal of the supernatant, and washing with n-heptane were twice performed. Thus obtained prepolymerized catalyst was resuspended in purified n-heptane, and adjusted to a transition metal catalyst component concentration of 0.7 g/L with n-heptane. The amount of prepolymerization was 10 g per 1 g of the solid titanium catalyst component.

### [3] Main polymerization

A loop reactor with an internal volume of 58 liters was continuously supplied with 30 kg/hr of propylene, 99 NL/hr of hydrogen molecule, 0.20 g/hr, in terms of the solid catalyst component, of a prepolymerized catalyst slurry, 1.85 ml/hr of triethylaluminum, and 0.71 ml/hr of diethylaminotriethoxysilane, and polymerization was carried out in a full liquid state free of gas phase. The temperature and the pressure of the loop reactor were 70°C and 3.4 MPa/G, respectively.

The obtained slurry was transferred to a vessel polymerization reactor with an internal volume of 100 liters, equipped with a stirrer, and was further subjected to polymerization. The polymerization reactor was supplied with 15 kg/hr of propylene, and 120 NL/hr of hydrogen molecule, and polymerization was carried out at a polymerization temperature of 70°C, and a pressure of 3.1 MPa/G.

The obtained slurry was transferred to an interposed tube with an internal volume of 2.4 liters. The slurry was gasified, and the gas and solid phases were separated with each other. Then, to a 480-liter, gas phase polymerization reactor, the polypropylene homopolymer powder was transferred, and ethylene/propylene block copolymerization was carried out. The gas phase polymerization reactor was continuously supplied with propylene, ethylene, and hydrogen molecule, so that the gas composition in the gas phase polymerization reactor was as follows: ethylene/(ethylene + propylene) = 0.23 (molar ratio), and hydrogen molecule/(ethylene + propylene) = 0.0038 (molar ratio). Polymerization was carried out at a polymerization temperature of 70°C, and a pressure of 0.46 MPa/G. The polymerization results are shown in Table 2.

**[Table 1]**

| | Polymerization pressure MPa/G | Polymerization activity g-PP/g-cat.hr | MFR g/10 min | mmmm % | MgO content wt ppm |
|---|---|---|---|---|---|
| Example 1 | 3.8 | 39680 | 765 | 98.1 | 8.4 |
| Example 2 | 3.8 | 39540 | 345 | 98.1 | - |
| Example 3 | 3.8 | 41150 | 513 | 97.9 | - |
| Comparative Example1 | 3.8 | 37620 | 203 | 97.3 | 9.0 |
| Comparative Example2 | 3.8 | 53240 | 87 | 98.2 | 6.1 |
| Comparative Example3 | 3.8 | 41770 | 650 | 97.1 | 8.2 |
| Comparative Example4 | 3.8 | 47510 | 330 | 97.2 | 7.5 |

**[Table 2]**

| | Block polypropylene | | Homopolymer part | | | Copolymer |
|---|---|---|---|---|---|---|
| | Dₛₒₗ % by weight | MFR (g/10 min) | MFR (g/10 min) | mmmm % | Dₛₒₗ % by weight | D_{[η]} (dl/g) |
| Example 4 | 15.2 | 34 | 185 | 97.7 | ≤0.5 | 5.3 |
| Example 5 | 16.2 | 40 | 244 | 97.9 | ≤0.5 | 7.1 |
| Comparative Example5 | 16.3 | 28 | 202 | 97.1 | ≤0.5 | 6.2 |
| Comparative Example6 | 14.8 | 32 | 152 | 96.8 | ≤0.5 | 5.2 |

### INDUSTRIAL AVAILABILITY

By using the catalyst for olefin polymerization of the present invention, an olefinic polymer having high fluidity (for example, in the case of a homopolymer of propylene, MFR is 150 g/min or more), as well as high stereoregularity (mmmm fraction ≥ 97.5%), even without excessive use of hydrogen molecule as a chain transfer agent, can be effectively manufactured.

## Claims

1. A catalyst for olefin polymerization, comprising the following components [A], [B] and [C]:
Component [A]: a prepolymer obtained by olefin prepolymerization on solid titanium catalyst component having an average particle size of 25 to 70 µm produced by contacting of a solid component (i) having an average particle size of 26 to 75 µm, containing magnesium, titanium, halogen, and an electron donor (c₃), and being free from detachment of titanium by washing with hexane at 25°C, a polar compound (ii) having a dipole moment of 0.50 to 4.00 Debye, and at least one compound (iii) selected from liquid titanium (d) and an electron donor (e), in which the content of titanium in the solid component (i) is reduced by ≥25% by weight, and the weight ratio of the sum of the electron donor (c₃) and the electron donor (e) to titanium [electron donor (c₃+e)/titanium atoms] is ≥7;
Component [B]: an organometallic compound; and
Component [C]: an organosilicon compound represented by the following formula (I):
Si(OR¹)₃(NR²R³) (I)
(wherein R¹ is a hydrocarbon group having 1 to 8 carbon atoms, R² is a hydrocarbon group having 1 to 12 carbon atoms or hydrogen atom, R³ is a hydrocarbon group having 1 to 12 carbon atoms).

2. The catalyst for olefin polymerization according to claim 1, wherein the component [A] is prepolymerized in the presence of an organosilicon compound (D) represented by the following formula (II):
Si(OR⁴)₄₋ₙR⁵ₙ (II)
(wherein n is 1, 2 or 3; R⁴ is a hydrocarbon group having 1 to 8 carbon atoms; and R⁵ is a hydrocarbon group having 1 to 40 carbon atoms).

3. A method for producing an olefin polymer, comprising polymerizing or copolymerizing an olefin in the presence of the catalyst for olefin polymerization according to claim 1 or 2.

4. The method for producing an olefin polymer according to claim 3, wherein a step of homopolymerizing propylene; and a step of copolymerizing propylene, and at least one olefin selected from ethylene and an α-olefin having 4 or more carbon atoms are sequentially carried out.

5. A block polypropylene obtained by the method according to claim 4, and satisfying simultaneously the following requirements [a] to [c]:
[a] an amount of the normal decane-soluble fraction at room temperature is 5.0 to 35% by weight;
[b] an intrinsic viscosity of the normal decane-soluble fraction at room temperature is 2.0 to 10 dl/g; and
[c] a homopolymer of propylene after completion of the step of homopolymerizing propylene, has an amount of the normal decane-soluble fraction at room temperature of 1.0% by weight or less, an mmmm fraction of 97.5% or more, and an MFR (230°C, under a load of 2.16 kg) of 200 g/10 min or more.
